(19) Europäisches Patentamt
European Patent Office
Office européen des brevets

(11) Veröffentlichungsnummer: **0 184 991 B1**

(12) **EUROPÄISCHE PATENTSCHRIFT**

(45) Veröffentlichungstag der Patentschrift: **19.11.92**

(21) Anmeldenummer: **85810570.3**

(22) Anmeldetag: **02.12.85**

(51) Int. Cl.5: **C07D 487/22**, C09B 47/32, D06P 1/14, D21H 21/28, //C09B47/26,(C07D487/22, 259:00,209:00,209:00,209:00, 209:00)

# (54) Kationische Phthalocyanin-Verbindungen.

(30) Priorität: **06.12.84 CH 5824/84**

(43) Veröffentlichungstag der Anmeldung: **18.06.86 Patentblatt 86/25**

(45) Bekanntmachung des Hinweises auf die Patenterteilung: **19.11.92 Patentblatt 92/47**

(84) Benannte Vertragsstaaten: **AT BE CH DE FR GB IT LI SE**

(56) Entgegenhaltungen:
**EP-A- 0 035 470**
**EP-A- 0 167 961**
**CH-A- 446 578**
**FR-A- 1 334 557**

(73) Patentinhaber: **CIBA-GEIGY AG**
**Klybeckstrasse 141**
**CH-4002 Basel(CH)**

(72) Erfinder: **Adam, Jean-Marie, Dr.**
**Rue de Village Neuf 60 D**
**F-68300 Rosenau(FR)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue kationische Phthalocyanin-Verbindungen, Verfahren zu deren Herstellung sowie deren Verwendung als Farbstoffe zum Färben oder Bedrucken von Textilmaterialien, Leder und vor allem Papier.

Die neuen kationischen Phthalocyanin-Verbindungen entsprechen der Formel

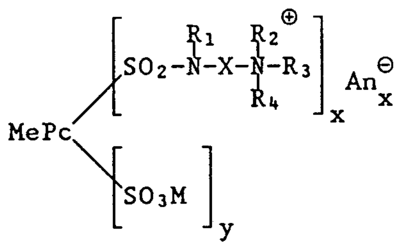

(I)

worin bedeutet:

MePc den Kupfer-, Kobalt- oder Nickelphthalocyaninrest,

$R_1$ Wasserstoff oder $C_1$-$C_4$-Alkyl,

X $C_1$-$C_8$-Alkylen,

$R_2$, $R_3$ und $R_4$ unabhängig voneinander unsubstituiertes oder durch Hydroxy, $C_1$-$C_4$-Alkoxy, Phenyl, Amino, $C_1$-$C_4$-Alkylamino oder Di-$C_1$-$C_4$-alkylamino substituiertes $C_1$-$C_4$-Alkyl, oder

$R_1$ und $R_2$ zusammen Aethylen oder Propylen, sofern X für Methylen oder Aethylen steht, oder $R_1$ und $R_2$ zusammen Methylen, sofern X für Aethylen steht, oder 2 oder 3 der Substituenten $R_2$, $R_3$ und $R_4$ zusammen mit dem N-Atom einen 5- bis 7-gliedrigen, gegebenenfalls durch $C_1$-$C_4$-Alkyl, $C_1$-$C_4$-Hydroxyalkyl, Amino, $C_1$-$C_4$-Alkylamino oder Di-$C_1$-$C_4$-alkylamino substituierten heterocyclischen Ring, der noch ein oder 2 weitere Heteroatome aus der Gruppe O, H und S als Ringglieder enthalten kann,

$An^{\ominus}$ ein Anion und M ein Kation,

wobei x grösser als y und y grösser als 0,5 ist und die Summe von x und y gleich oder kleiner als 4 ist.

Die EP-A-167 961 betrifft Kupferphthalocyaninfarbstoffe der oben angegebenen Formel (I), wobei die Summe der C-Atome von $R_2$, $R_3$ und $R_4$ mindestens 8 beträgt. Diese Anmeldung ist für die Vertragsstaaten CH, DE, FR, GB, IT und LI neuheitsschädlich unter Artikel 54(3) EPUe. Die Ansprüche der vorliegenden Anmeldung für die genannten Vertragsstaaten sind deshalb entsprechend eingeschränkt (d.h. $R_2$, $R_3$ und $R_4$ können nicht mehr Phenylalkyl sein und die Summe ihrer C-Atome ist höchstens 7).

$R_1$ in der Bedeutung von Alkyl stellt einen $C_1$-$C_4$-Alkylrest dar, der unverzweigt oder verzweigt sein kann; beispielsweise kommt in Frage ein Methyl-, Aethyl-, n- und iso-Propylrest. In bevorzugten Verbindungen der Formel (I) bedeutet $R_1$ Wasserstoff.

Der Alkylenrest X weist vorzugsweise 2-8, z.B. 2-5, und insbesondere 3 C-Atome auf. Bilden jedoch $R_1$ und $R_2$ zusammen den Methylen-, Aethylen- oder Propylenrest, dann bedeutet X Methylen oder Aethylen, vorzugsweise Aethylen.

Bedeutet $R_2$, $R_3$ und $R_4$ (unabhängig voneinander) einen $C_1$-$C_4$-Alkylrest, so kann dieser unverzweigt oder verzweigt sein. Diese Reste können durch Hydroxy, $C_1$-$C_4$-Alkoxy, Phenyl oder Aminogruppen substituiert sein; Die $C_1$-$C_4$ Alkoxygruppe kann unverzweigt oder verzweigt sein, wie Methoxy, Aethoxy, n- und iso-Propoxy; kommt als Substituent eine Aminogruppe in Frage, so handelt es sich beispielsweise um die $NH_2$-Gruppe, um die $NH(C_1$-$C_4$-Alkyl)-Gruppe oder um die $N(C_1$-$C_4$-Alkyl$)_2$-Gruppe. Ein Phenylsubstituent kann weiter substituiert sein, z.B. durch Methyl, Methoxy oder/und Halogen.

Bedeuten die Substituenten $R_1$ und $R_2$ zusammen Methylen, Aethylen oder Propylen, so ergibt die Gruppierung

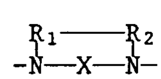

einen gesättigten heterocyclischen Ring, der 2 Stickstoffatome enthält, wobei für den Fall, dass $R_1$ + $R_2$ Methylen bedeutet, X nicht auch für Methylen steht. Der entstehende Ring ist 5- bis 7-gliedrig. Beispiele dafür sind: Imidazolidin, Piperazin, Hexahydropyrimidin, 1,3- oder 1,4-Diazacycloheptan. Vorzugsweise ist $R_1$ + $R_2$ und X jeweils Aethylen, wodurch der Piperazinring entsteht.

Zwei der Substituenten $R_2$, $R_3$ und $R_4$ können zusammen mit dem N-Atom einen 5-, 6- oder 7-gliedrigen heterocyclischen Ring bilden. Dieser Ring kann noch ein oder zwei, vorzugsweise ein weitere(s) Heteroatom(e) als Ringglied(er) enthalten, und zwar aus der Gruppe O, N und S, vorzugsweise N und O. Derartige Ringe können auch substituiert sein, durch $C_1$-$C_4$-Alkyl, $C_1$-$C_4$-Hydroxyalkyl, Amino-, Alkylamino- oder Dialkylaminoalkyl (alle Alkylgruppen mit 1-4 C-Atomen). Die genannten Ringe sind vorzugsweise gesättigte Heterocyclen. Als Beispiele seien der Pyrrolidin-, Piperidin-, Morpholin- oder der gegebenenfalls substituierte Piperazin- oder Azacycloheptan-Ring genannt; dabei kann der Piperazinring z.B. als Substituenten am Stickstoffatom eine $C_1$-$C_4$-Alkylgruppe tragen, die ihrerseits z.B. Hydroxy- oder Aminogruppen enthalten kann.

Bedeuten $R_2$, $R_3$ und $R_4$ zusammen unter Einschluss des N-Atoms einen heterocyclischen Ring, so kann dieser zusätzlich ebenfalls weitere Heteroatome als Ringglieder enthalten, wie im vorstehenden Absatz beschrieben. Er kann gegebenenfalls substituiert sein. Es handelt sich dabei vorzugsweise um einen ungesättigten, z.B. aromatischen oder bicyclischen Ring, beispielsweise um einen unsubstituierten oder durch $C_1$-$C_4$-Alkyl, $C_1$-$C_4$-Hydroxyalkyl, Amino, $C_1$-$C_4$-Alkylamino oder Di-$C_1$-$C_4$-alkylamino substituierten Pyridinring oder um den Ring der Formel

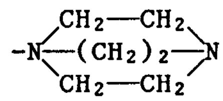

Besonders zu erwähnen sind jene Verbindungen der Formel (I), worin MePc den Rest des Kupferphthalocyanins bedeutet.

In bevorzugten Phthalocyaninverbindungen der Formel (I) bedeuten: $R_1$ Wasserstoff oder $C_1$-$C_4$-Alkyl oder zusammen mit $R_2$ Aethylen, wenn X für Aethylen steht, $R_2$, $R_3$ und $R_4$ unabhängig voneinander $C_1$-$C_4$-Alkyl, $C_1$-$C_4$-Hydroxyalkyl oder Phenyl-$C_1$-$C_4$-alkyl, wobei vorzugsweise nur einer dieser 3 Substituenten einen substituierten Alkylrest bedeutet; oder 2 der Substituenten $R_2$, $R_3$ und $R_4$ gemeinsam mit dem N-Atom einen gesättigten 5- oder 6-gliedrigen heterocyclischen Ring, der unsubstituiert oder mit 1 oder 2 $C_1$-$C_4$-Alkyl- oder/und $C_1$-$C_4$-Hydroxyalkylgruppen substituiert ist und der noch ein weiteres O-oder N-Atom als Ringglied enthalten kann.

Besonders bevorzugt sind jene Verbindungen der Formel (I), worin $R_1$ Wasserstoff oder zusammen mit $R_2$ Aethylen, wenn X für Aethylen steht, $R_2$, $R_3$ und $R_4$ unabhängig voneinander $C_1$-$C_4$-Alkyl, $C_1$-$C_4$-Hydroxyalkyl oder Benzyl, wobei nur einer dieser 3 Substituenten für Hydroxyalkyl oder Benzyl stehen kann, oder 2 der Substituenten $R_2$, $R_3$ und $R_4$ gemeinsam mit dem N-Atom den Pyrrolidin-, Piperidin-, Morpholin- oder unsubstituierten oder $C_1$-$C_4$-alkyl oder $C_1$-$C_4$-hydroxyalkylsubstituierten Piperazinrest bedeuten.

Von praktischem Interesse sind besonders jene Verbindungen der Formel (I), worin $R_2$, $R_3$ und $R_4$ unabhängig voneinander $C_1$-$C_4$-Alkyl, insbesondere Methyl, bedeuten sowie jene, worin $R_1$ Wasserstoff bedeutet.

Als Anion $An^{\ominus}$ kommen die für kationische Farbstoffe üblichen organischen und anorganischen, vorzugsweise farblosen Anionen in Betracht. Das Anion wird im allgemeinen durch das Herstellungsverfahren (z.B. durch die Quaternierung) oder durch die eventuell vorgenommene Isolierung bzw. Reinigung eingeführt. Man kann Anionen aber auch gezielt nach üblichen Verfahren gegeneinander austauschen.

Beispiele für mögliche Anionen $An^{\ominus}$ sind: Halogenid-, (z.B. Chlorid-, Bromid- oder Jodid-), Bortetrafluorid-, Rhodanid-, Sulfat-, Alkylsulfat- (z.B. Methylsulfat- oder Aethylsulfat-), Aminosulfat-, Chlorat-, Perchlorat-, Carbonat-, Bicarbonat-, Phosphat-, Phosphormolybdat-, Phosphorwolframat-, Phosphorwolframmolybdat-, Benzolsulfonat-, Chlorbenzolsulfonat-, Naphthalinsulfonat-, Toluolsulfonat-, Oxalat-, Maleinat-, Formiat-, Acetat-, Propionat-, Lactat-, Succinat-, Chloracetat-, Tartrat-, Methansulfonat- und Benzoationen, ferner komplexe Anionen, insbesondere jene von Chlorzinkdoppelsalzen, z.B. das Tetrachlorzinkanion.

Zweckmässig bedeutet $An^{\ominus}$ ein Halogenid-, Methylsulfat-, Aethylsulfat-, Phosphat-, Sulfat-, Carbonat-, Benzolsulfonat-, Toluolsulfonat-, 4-Chlorbenzolsulfonat-, Acetat-, Formiat- oder Tetrachlorzinkanion; insbesondere liegen die erfindungsgemässen Verbindungen als Halogenide (vor allem Chloride), Methosulfate, Aethosulfate, Sulfate, Benzol- oder Toluolsulfonate vor.

M kann als Kation das Wasserstoffion oder das Aequivalent eines Metallkations bedeuten. Beispielsweise bedeutet M das Wasserstoffion, ein Alkalimetall- oder Erdalkalimetallkation oder ein Ammoniumion (d.h. $NH_4^{\oplus}$ oder das Kation eines primären, sekundären oder tertiären Amins). Bevorzugt ist M das Wasserstoffion oder ein Alkalimetallkation (z.B. das Natrium-, Kalium- oder Litium-, vor allem das Natriumion), insbesondere

das Wasserstoffion.

Die erfindungsgemässen Verbindungen sind kationischer Natur, weshalb x grösser als y sein muss. Der Wert von y ist grösser als 0,5, insbesondere gleich oder grösser als 1. In bevorzugten Verbindungen der Formel (I) ist x minus y 0,1 bis 1,5. Die Summe x + y ist vorzugsweise 1,5 bis 4, insbesondere 2,5 - 3,5.

Die neuen kationischen Verbindungen der Formel (I) haben eine sehr gute Löslichkeit in kaltem Wasser und weisen keine pH-Empfindlichkeit, vor allem im pH-Bereich von 4-10, auf.

Die neuen kationischen Verbindungen der Formel I können nach an sich bekannten Verfahren hergestellt werden, beispielsweise indem man

a) eine Verbindung der Formel

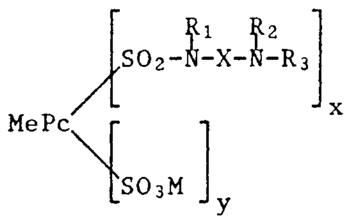

(II)

mit einer Verbindung der Formel

$R_4$ - An (III)

worin die allgemeinen Symbole die unter Formel (I) angegebene Bedeutung haben, quaterniert, oder

b) eine Verbindung der Formel

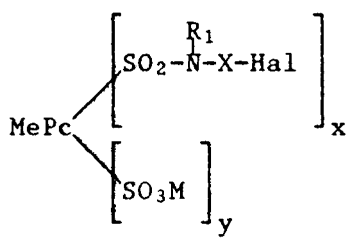

(IV)

mit einer Verbindung der Formel

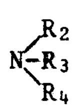

(V)

worin Hal ein Halogenatom bedeutet und die anderen Symbole die unter Formel (I) angegebene Bedeutung haben, umsetzt.

Die Quaternierungsreaktion der Verbindung (II) mit der Verbindung (III) erfolgt nach bekannter Art und Weise. Sie kann z.B. in einem inerten Lösungsmittel wie etwa in einem Kohlenwasserstoff$_7$ Chlorkohlenwasserstoff oder Nitrokohlenwasserstoff, wie Benzol, Toluol, Xylol, Tetrachloräthan, Chloroform, Tetrachlorkohlenstoff, Mono- oder Dichlorbenzol oder Nitrobenzol, in einem Säureamid oder Säureanhydrid, wie Dimethylformamid, N-Methylacetamid oder Essigsäureanhydrid, in Dimethylsulfoxid oder in einem Keton, wie Aceton oder Methyläthylketon durchgeführt werden. Anstelle eines organischen Lösungsmittels kann auch ein Ueberschuss des Alkylierungsmittels verwendet werden. Es kann aber auch in wässrigem Medium gearbeitet werden, z.B. in wässriger Suspension, oder in Eisessig. Die Quaternierung wird vorteilhaft bei erhöhter Temperatur, z.B. 30-200 °C, insbesondere 80-150 °C, gegebenenfalls unter Zusatz von säurebindenden Mitteln, wie einer anorganischen Base, z.B. Magnesiumoxid, Magnesiumcarbonat, Soda, Calciumcarbonat oder Natriumbicarbonat und gegebenenfalls unter Druck, vorgenommen. Die jeweils günstigsten Bedingungen lassen sich durch einen Vorversuch leicht ermitteln.

Zur Quaternierung werden bekannte Quaternierungsmittel $R_4$An eingesetzt, die den Rest $R_4$ einführen und deren Rest An in das Anion $An^{\ominus}$ überführt wird. Einige Beispiele für Quaternierungsmittel sind:

Alkylhalogenide, Halogenhydrine, Alkylenoxide, Alkylester der Schwefelsäure oder Alkylester organischer Sulfonsäuren, beispielsweise Methylchlorid, -bromid oder -jodid, Aethylchlorid, -bromid oder -jodid, Propylbromid oder -jodid, Butylbromid, Benzylchlorid oder -bromid, Aethylenchlorhydrin, Dimethylsulfalt, Diäthylsulfat, Dibutylsulfat, Benzolsulfonsäuremethylester, p-Toluolsulfonsäuremethyl-, -äthyl-, -propyl- oder -butylester, n- und iso-Propyl- und n-, sec.- und tert. Butylester der Benzolsulfonsäure, Trimethyl-oxoniumborfluorid, Aethylenoxid, Propylenoxid.

Bevorzugte Quaternierungsmittel $R_4An$ sind z.B. Alkylhalogenide, wie Methyl- oder Aethylchlorid, Methyl-, Aethyl- oder Butylbromid oder Methyl- oder Aethyljodid, vor allem jedoch Alkylsulfate wie Dimethyl-, Diäthyl- und Dibutylsulfat, und Alkylester von aromatischen Sulfonsäuren, wie Methyl-p-toluolsulfonat, Methylbenzolsulfonat sowie die n- und iso-Propyl- und n-, sec.- und tert.-Butylester von Benzolsulfonsäure.

Der Rest An bedeutet also vorzugsweise Halogen (z.B. Cl, Br, J), Alkyl-$SO_4^{\ominus}$ oder

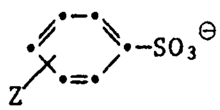

(Z = H, Halogen, Methyl).

Die Umsetzung der Verbindung (IV) mit dem tert.Amin der Formel (V) erfolgt vorzugsweise bei Temperaturen zwischen etwa 0 und 80 °C und insbesondere bei Raumtemperatur. Als Reaktionsmedium kann hierbei ein Ueberschuss des Amins, ein organisches Lösungsmittel und/oder Wasser dienen. Als tert.Amine kommen vor allem Trimethylamin und Triäthylamin in Betracht. Die Verbindung der Formel (V) kann aber auch ein Stickstoffheterocyclus sein, z.B. gegebenenfalls substituiertes Pyridin oder 1,4-Diazabicyclo[2.2.2]octan (Triäthylendiamin).

Die Ausgangsverbindungen der Formel (II) werden beispielsweise erhalten, indem man ein Phthalocyaninsulfonsäurechlorid der Formel

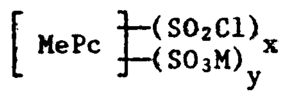
(VI)

mit einem Amin der Formel

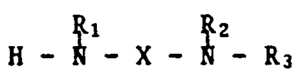
(VII)

in welchen Formeln die allgemeinen Symbole die unter Formel (I) angegebene Bedeutung haben, umsetzt.

Die Phthalocyaninsulfonsäurechloride der Formel (VI) können die Sulfonsäurechlorid-Gruppen in den 3- oder 4-Stellungen der Benzol-Kerne tragen. Sie werden in üblicher Weise durch Behandeln des entsprechenden Metallphthalocyanins bzw. von Metallphthalocyaninsulfonsäuren mit Chlorsulfonsäure, gegebenenfalls unter Zusatz von dabei Verbindungen der Formel (VI) mit bestimmten Verhältnissen x:y. Zur Isolierung werden die Chlorsulfonsäure-Lösungen auf Eis gegeben, die ausgefallenen Phthalocyaninsulfonsäurechloride abgesaugt und in Form von wässrigen Pasten weiter verarbeitet.

Als Beispiele für Amine der Formel (VII) sind genannt:
1-Amino-2-dimethylamino-äthan,
1-Amino-2-diäthylamino-äthan,
1-Methylamino-2-dimethylamino-äthan,
1-Amino-3-dimethylamino-propan,
1-Amino-3-diäthylamino-propan,
1-Methylamino-3-dimethylamino-propan,
4-Amino-1-diäthylamino-pentan,
N-Methyl-piperazin, und
N-(3-Aminopropyl)-pyrrolidin.

Die Ausgangsverbindungen der Formel (IV) werden analog zu denjenigen der Formel II erhalten, indem man ein Phthalocyaninsulfonsäurechlorid der Formel (VI) mit einer Verbindung der Formel

$$H - \overset{R_1}{\overset{|}{N}} - X - Hal \qquad (VIII)$$

worin $R_1$ und X die angegebene Bedeutung haben und Hal ein Halogenatom darstellt, umsetzt.

Nach der Reaktion der Verbindung (II) mit (III) bzw. (IV) mit (V) werden die neuen kationischen Verbindungen gegebenenfalls vom Reaktionsmedium getrennt und getrocknet. Falls gewünscht oder erforderlich, kann man in den kationischen Verbindungen der Formel (I) das Anion $An^{\ominus}$ nach bekannter Art und Weise gegen ein anderes Anion austauschen.

Die neuen Verbindungen lassen sich aber auch direkt, nach Einengen des Reaktionsmediums, in eine flüssige Handelsform überführen, oder als Pulver- bzw. Granulat-Präparationen zum Einsatz bringen.

Verwendung finden die neuen kationischen Verbindungen der Formel (I) als Farbstoffe zum Färben oder, unter Zusatz von Binde- und gegebenenfalls Lösungsmitteln, zum Bedrucken von mit kationischen Farbstoffen färbbaren Materialien, z.B. von Textilmaterialien, die vorteilhaft aus Homo- oder Mischpolymerisaten des Acrylnitrils bestehen oder synthetische Polyamide oder Polyester, welche durch saure Gruppen modifiziert sind. Man färbt vorzugsweise in wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware wie Hemden oder Pullover.

Durch die Applikation der Farbstoffe lassen sich egale türkisfarbene Färbungen bzw. Drucke herstellen, die sich durch sehr gute Allgemeinechtheiten auszeichnen.

Des weiteren können die neuen kationischen Farbstsoffe auch zum Färben und Bedrucken von natürlichen und regenerierten Cellulosematerialien, vor allem von Baumwolle und Viscose verwendet werden, wobei man ebenfalls türkisfarbene farbstarke Ausfärbungen erhält. Die neuen Farbstoffe haben auf diesen Textilmaterialien ein gutes Ziehvermögen, einen guten Ausziehgrad und die erhaltenen Färbungen weisen sehr gute Echtheiten, vor allem Nassechtheiten, auf.

Eine weitere bevorzugte Verwendung der neuen kationischen Farbstoffe der Formel (I) liegt in der Anwendung zum Färben von Papier aller Arten, vor allem von gebleichtem, ungeleimtem und geleimtem ligninfreiem Papier. Ganz besonders geeignet sind diese Verbindungen zum Färben von ungeleimtem Papier (Tissues) als Folge ihrer sehr hohen Affinität zu diesem Substrat.

Die neuen Verbindungen ziehen sehr gut auf diese Substrate auf, wobei die Abwasser praktisch farblos bleiben, was ein eminenter ökologischer Vorteil ist.

Die erhaltenen Färbungen sind nassecht, d.h. sie zeigen keine Neigung zum Ausbluten, wenn gefärbtes Papier in nassem Zustand mit feuchtem weissem Papier in Berührung gebracht wird. Diese Eigenschaft ist besonders für sogenannte "Tissues" erwünscht, bei denen vorhersehbar ist, dass das gefärbte Papier in nassem Zustand (z.B. getränkt mit Wasser, Alkohol, Tensid-Lösung etc...) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der neuen Farbstoffe ist für das Kontinue-Färben von Papier von grossem Vorteil und ermöglicht einen viel breiteren Einsatz dieses bekannten wirtschaftlichen Verfahrens.

Die neuen Farbstoffe können nach den verschiedensten Verfahren auf das Papiermaterial appliziert werden, z.B. in der Massefärbung, in der Leimpresse und aus wässrigen Tinten nach der INK-JET Methode.

Schlussendlich können die neuen Farbstoffe noch zum Färben von Leder (durch z.B. Sprühen, Bürsten und Tauchen) verwendet werden und zur Bereitung von Tinten.

Die folgenden Beispiele veranschaulichen die Erfindung, ohne sie darauf zu limitieren. Die Temperaturen sind in Grad Celsius angegeben. Teile (T) bedeuten Gewichtsteile und %-Angaben sind Gewichtsprozente.

Beispiel 1: 11,5 Teile der Verbindung der Formel

$$\left[ CuPc \begin{array}{l} -(SO_2NHCH_2CH_2CH_2N(CH_3)_2)_x \\ -(SO_3H)_y \end{array} \right. \qquad (1a)$$

mit x = 2,1 und y =1,1 werden in 50 T Dimethylformamid bei 50° gelöst und mit 4 T Dimethylsulfat versetzt. Das Reaktionsgemisch wird 1 Stunde auf 100° erhitzt, anschliessend auf Raumtemperatur gekühlt und mit 100 Teilen Aceton verdünnt. Der ausgefallene Farbstoff der Formel

$$\left[\ CuPc \begin{array}{l} -(SO_2NHCH_2CH_2CH_2\overset{\oplus}{N}(CH_3)_3\ \ CH_3OSO_3^{\ominus})_x \\ -(SO_3H)_y \end{array}\right] \qquad (1)$$

($\lambda_{max}$ = 606 nm) mit x = 2,1 und y = 1,1 ist in Wasser gut löslich und färbt Papier in klaren Türkistönen unabhängig vom pH.

Ersetzt man die im obigen Beispiel verwendete Ausgangsverbindung durch analoge Ausgangsverbindugnen mit x = 2,2 und y = 1,6 oder x = 1,7 und y = 1,5, so erhält man Farbstoffe mit ähnlich guten färberischen Eigenschaften.

Die als Ausgangsprodukt benötigte Verbindung der Formel (1a) wird folgendermassen hergestellt:

60 Teile Kupferphthalocyanin werden in 350 Teilen Chlorsulfonsäure bei 25° gelöst und 6 Stunden auf 130° erwärmt. Das Reaktionsgemisch wird auf 80° abgekühlt und mit 70 Teilen Thionylchlorid versetzt. Man rührt noch 4 Stunden bei dieser Temperatur, giesst auf Eis, filtriert ab und wäscht mit Wasser. Die erhaltene feuchte Paste wird in 500 Teilen Wasser angeschlämmt und mit 65 Teilen 1-Amino-3-dimethylaminopropan versetzt. Man rührt eine Stunde bei 60°, filtriert den Niederschlag ab, wäscht mit warmem Wasser und trocknet. Die so erhaltene Verbindung entspricht der Formel (1a).

Die für die nachfolgenden Beispiele 3-13 benötigten Ausgangsverbindungen werden auf analoge Art erhalten, indem man das erhaltene Phthalocyaninsulfochlorid mit dem entsprechenden Amin umsetzt.

Beispiel 2: 11,5 Teile der Ausgangsverbindung der Formel (1a) gemäss Beispiel 1 werden in 80 Teilen Wasser angeschlämmt und mit 4 Teilen Dimethylsulfat versetzt. Man rührt 1 Stunde bei 25° und erhitzt mit einer Aufheizungsrate von 10° pro Stunde bis auf 55°; anschliessend werden 15 Teile Ameisensäure zugegeben. Die so erhaltene flüssige Farbstofflösung kann direkt zum Färben von Papier verwendet werden.

Ersetzt man das in Beispiel 1 verwendete Ausgangsprodukt der Formel (1a) durch jeweils äquimolare Mengen von Verbindungen der Formel

$$\left[\ CuPc \begin{array}{l} -(SO_2{-}V)_{2,1} \\ -(SO_3H)_{1,1} \end{array}\right]$$

(siehe Spalte 2 der nachfolgenden Tabelle) und quaterniert mit einem der in Spalte 3 der nachfolgenden Tabelle angegebenen Alkylierungsmittel nach dem in Beispiel 1 beschriebenen Verfahren, so erhält man die in Spalte 4 der nachfolgenden Tabelle angegebenen Verbindungen der Formel

$$\left[\ CuPc \begin{array}{l} -(SO_2{-}W)_{2,1} \\ -(SO_3H)_{1,1} \end{array}\right] ,$$

die Papier in klaren Türkistönen unabhängig vom pH-Wert färben.

Tabelle

| Beispiel Nr. | V | Alkylierungs-mittel | W | | Farbton auf Papier |
|---|---|---|---|---|---|
| 3 | $-NH-(CH_2)_3-N(C_2H_5)_2$ | $(CH_3)_2SO_4$ | 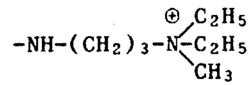 | $CH_3SO_4^{\ominus}$ | türkisblau |
| 4 | $-NH-(CH_2)_3-N(CH_3)_2$ | $(C_2H_5)_2SO_4$ | 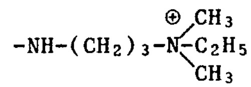 | $C_2H_5SO_4^{\ominus}$ | türkisblau |
| 5 | $-NH-(CH_2)_3-N(CH_3)_2$ | 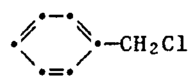 | 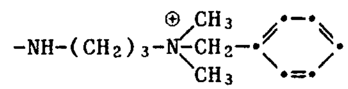 | $Cl^{\ominus}$ | türkisblau |
| 6 | $-NH(CH_2)_3-N(CH_3)_2$ | $CH_2OH-CHOH-CH_2Cl$ | 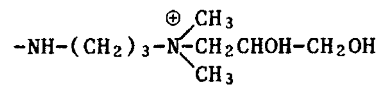 | $Cl^{\ominus}$ | türkisblau |
| 7 | 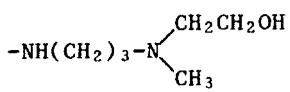 | $(CH_3)_2SO_4$ | 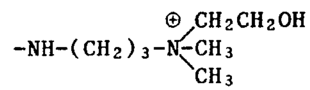 | $CH_3SO_4^{\ominus}$ | türkisblau |
| 8 | 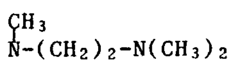 | $(CH_3)_2SO_4$ | 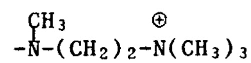 | $CH_3SO_4^{\ominus}$ | türkisblau |
| 9 | 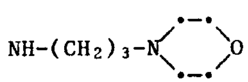 | $(CH_3)_2SO_4$ | 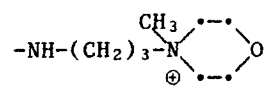 | $CH_3SO_4^{\ominus}$ | türkisblau |

Tabelle

| Beispiel Nr. | V | Alkylierungsmittel | W | Farbton auf Papier |
|---|---|---|---|---|
| 10 | 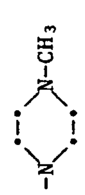 | $(CH_3)_2SO_4$ | 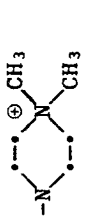 $CH_3SO_4^{\ominus}$ | türkisblau |
| 11 | 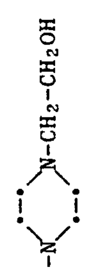 | $(CH_3)_2SO_4$ | 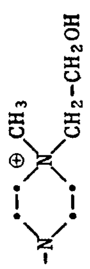 $CH_3SO_4^{\ominus}$ | türkisblau |
| 12 | 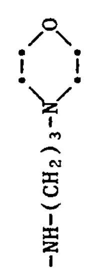 | $(C_2H_5)_2SO_4$ | 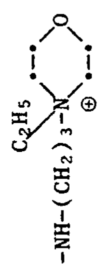 $C_2H_5SO_4^{\ominus}$ | türkisblau |
| 13 | 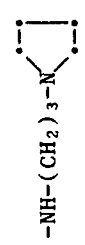 | $(CH_3)_2SO_4$ | 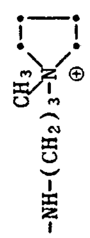 $CH_3SO_4^{\ominus}$ | türkisblau |

Setzt man in den Beispielen 1-13 an Stelle der Cu-Phthalocyanin-Ausgangsverbindungen die entsprechenden Co- oder Ni-Phthalocyaninverbindungen ein, so kommt man zu Verbindungen, die auf Papier ebenfalls Färbungen mit guten Eigenschaften ergeben.

Beispiel 14: Ein aus 50 % gebleichtem Kiefernsulfit-Zellstoff und 50 % gebleichtem Buchensulfit-Zellstoff bestehender Trockenstoff wird im Holländer mit Wasser angeschlagen und bis zum Mahlgrad 30° SR gemahlen, so dass der Trockengehalt etwas über 2.5 % liegt, und anschliessend mit Wasser auf exakt 2.5 % Trockengehalt des Dickstoffes eingestellt.

200 Teile des Dickstoffes werden mit 5 Teilen einer schwach essigsauren 1,5%igen wässrigen Lösung

des Farbstoffs aus Beispiel 1 versetzt und ca. 5 Minuten verrührt. Man verdünnt dann die Masse mit etwa 500 Teilen Wasser und stellt hieraus in üblicher Weise durch Absaugen über einen Blattbildner Papierblätter her. Die Papierblätter weisen eine kräftige türkisblaue Färbung auf.

Beispel 15: Zu 200 g eines 2,5%igen Papierbreies, bestehend aus 50 % gebleichtem Kiefernsulfit-Zellstoff und 50 % gebleichtem Birkensulfit-Zellstoff mit einem Mahlgrad von 35° SR werden 0,5 g der Farbstoff-Flüssigeinstellung gemäss Beispiel 2, unter Rühren zugegeben. Anschliessend wird mit 10 g einer 1%igen Harzleim-Lösung und 20 g einer 1%igen Aluminiumsulfat-Lösung geleimt und mit 500 g Wasser verdünnt. Nach 15-minütigem Rühren wird der gefärbte Papierbrei auf einen Blattbildner mit Filterpapierunterlage gegossen und abgesaugt. Das Papierblatt wird zwischen zwei Filterpapierblättern und gleich grossen Filzen in einer Presse abgegautscht und danach auf einem Heisszylinder bei 100°C ca. 5 Minuten getrocknet. Man erhält ein brillant türkis gefärbtes Papier.

Wenn das auf diese Weise gefärbte Papier in Wasser aufschlägt und die erhaltene Suspension mit 1 % aktivem Chlor (bezogen auf Papierstoff) bei pH 7 bis 2 behandelt, erhält man eine praktisch farblose Papiermasse zurück.

Beispiel 16: In einer Leimpressenlösung bestehend aus 50 g nicht ionogener Stärke und 20 g Leimungsmittel (ABS-Polymer) verrührt man 10 g der nach Beispiel 2 erhaltenen Farbstoff-Flüssigeinstellung und färbt Rohpapiere oder schwach geleimte Papiere bei einer Durchgangsgeschwindigkeit von ca. 5 bis 7 m/min bei 20°C und einem Aufdruck von ca. 25 % (Labor-Foulard Typ, Fa. W. Mathis, Niderhasli, Schweiz). Man erhält gleichmässig brillant türkis gefärbte Papiere, die sich mit Hilfe von Chlorlauge gut bleichen lassen.

Beispiel 17: 10 Teile Baumwollgewebe (gebleichte mercerisierte Baumwolle) werden in einem Labor-Baumfärbeapparat in 200 Teile einer Flotte (Wasserhärte 10° dH, pH 4, 3 Umwälzungen der Färbeflotte pro Minute), die 0,05 Teile des Farbstoffes gemäss Beispiel 1 enthält, gefärbt. Die Temperatur wird in 60 Minuten von 20° auf 100° erhöht und dann während 15 Minuten konstant gehalten.

Die Färbeflotte ist völlig ausgezogen. Es entsteht auf dem Baumwollgewebe eine farbstarke türkisfarbene Färbung.

Färbt man bei gleicher Arbeitsweise ein Textilgewebe aus Regenerat-Cellulose (Viskose), so erhält man auch auf diesem Material mit dem Farbstoff des Beispiels 1 eine farbstarke türkisfarbene Färbung.

Verwendet man in den Beispielen 14-17 an Stelle des Farbstoffs des Beispiels 1 jeweils eine Verbindung der Beispiele 3-16, so erhält man ebenfalls türkisfarbene Färbungen mit guten Eigenschaften.

**Patentansprüche**
**Patentansprüche für folgende Vertragsstaaten : CH, DE, FR, GB, IT, LI**

**1.** Phthalocyaninverbindungen der Formel

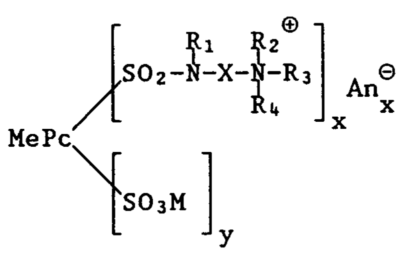

worin bedeutet:
MePc den Kupfer-, Kobalt- oder Nickelphthalocyaninrest,
$R_1$ Wasserstoff oder $C_1$-$C_4$-Alkyl,
X $C_1$-$C_8$-Alkylen,
$R_2$, $R_3$ und $R_4$ unabhängig voneinander unsubstituiertes oder durch Hydroxy, $C_1$-$C_4$-Alkoxy, Amino, $C_1$-$C_4$-Alkylamino oder Di-$C_1$-$C_4$-alkylamino, substituiertes $C_1$-$C_4$-Alkyl, oder
$R_1$ und $R_2$ zusammen Aethylen oder Propylen, sofern X für Methylen oder Aethylen steht, oder $R_1$ und $R_2$ zusammen Methylen, sofern X für Aethylen steht, oder 2 oder 3 der Substituenten $R_2$, $R_3$ und $R_4$ zusammen mit dem N-Atom einen 5-bis 7-gliedrigen, gegebenenfalls durch $C_1$-$C_4$-Alkyl, $C_1$-$C_4$-Hydroxyalkyl, Amino, $C_1$-$C_4$-Alkylamino oder Di-$C_1$-$C_4$-alkylamino substituierten heterocyclischen Ring, der noch ein oder zwei weitere Heteroatome aus der Gruppe O, H und S als Ringglieder enthalten kann,

$An^{\ominus}$ ein Anion, und M ein Kation, wobei x grösser als y und y grösser als 0,5 ist und die Summe von x und y gleich oder kleiner als 4 ist und wobei die Summe der C-Atome von $R_2$, $R_3$ und $R_4$ höchstens 7 ist.

**2.** Phthalocyaninverbindungen nach Anspruch 1, worin MePc den Kupferphthalocyaninrest bedeutet.

**3.** Phthalocyaninverbindungen nach Anspruch 1, worin X $C_2$-$C_8$-Alkylen bedeutet.

**4.** Phthalocyaninverbindungen nach einem der Ansprüche 1-3, worin bedeutet: $R_1$ Wasserstoff oder $C_1$-$C_4$-Alkyl oder zusammen mit $R_2$ Aethylen, wenn X für Aethylen steht, $R_2$, $R_3$ und $R_4$ unabhängig voneinander $C_1$-$C_4$-Alkyl oder $C_1$-$C_4$-Hydroxyalkyl, wobei vorzugsweise nur einer dieser 3 Substituenten einen substituierten Alkylrest bedeutet; oder 2 der Substituenten $R_2$, $R_3$ und $R_4$ gemeinsam mit dem N-Atom einen gesättigten 5-oder 6-gliedrigen heterocyclischen Ring, der unsubstituiert oder mit 1 oder 2 $C_1$-$C_4$-Alkyl- oder/und $C_1$-$C_4$-Hydroxyalkylgruppen substituiert ist und der noch ein weiteres O- oder N-Atom als Ringglied enthalten kann.

**5.** Phthalocyaninverbindungen nach Anspruch 4, worin $R_1$ Wasserstoff oder zusammen mit $R_2$ Aethylen, wenn X für Aethylen steht, $R_2$, $R_3$ und $R_4$ unabhängig voneinander $C_1$-$C_4$-Alkyl oder $C_1$-$C_4$-Hydroxyalkyl, wobei nur einer dieser 3 Substituenten für Hydroxyalkyl stehen kann; oder 2 der Substituenten $R_2$, $R_3$ und $R_4$ gemeinsam mit dem N-Atom den Pyrrolidin-, Piperidin-, Morpholin- oder unsubstituierten oder $C_1$-$C_4$-alkyl- oder $C_1$-$C_4$-hydroxyalkylsubstituierten Piperazinrest bedeuten.

**6.** Phthalocyaninverbindungen nach einem der Ansprüche 1-5, worin $R_1$ Wasserstoff bedeutet.

**7.** Phthalocyaninverbindungen nach einem der Ansprüche 1-6, worin $R_2$, $R_3$ und $R_4$ unabhängig voneinander unsubstituiertes $C_1$-$C_4$-Alkyl bedeuten.

**8.** Phthalocyaninverbindungen nach Anspruch 1, worin M Wasserstoff bedeutet.

**9.** Phthalocyaninverbindungen nach Anspruch 1, worin y gleich oder grösser als 1 ist.

**10.** Phthalocyaninverbindungen nach Anspruch 1, worin x minus y 0,1 bis 1,5 ist.

**11.** Verfahren zur Herstellung von im Anspruch 1 definierten Phthalocyaninverbindungen, dadurch gekennzeichnet, dass man

a) eine Verbindung der Formel

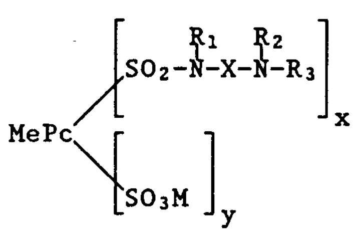

mit einer Verbindung der Formel $R_4$-An, worin die Symbole die im Anspruch 1 angegebene Bedeutung haben, quaterniert, oder

b) eine Verbindung der Formel

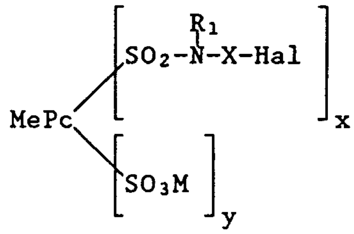

mit einer Verbindung der Formel

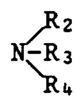

worin Hal ein Halogenatom bedeutet und die anderen Symbole die im Anspruch 1 angegebene Bedeutung haben, umsetzt.

**12.** Verwendung der im Anspruch 1 definierten Phthalocyaninverbindungen als Farbstoffe zum Färben oder Bedrucken von Substraten, welche mit kationischen Farbstoffen färbbar sind.

**13.** Verwendung nach Anspruch 12 zum Färben oder Bedrucken von Textilmaterialien.

**14.** Verwendung nach Anspruch 13 zum Färben oder Bedrucken von Cellulose- und Polyacrylnitrilmaterialien.

**15.** Verwendung nach Anspruch 12 zum Färben oder Bedrucken von Papier.

**Patentansprüche für folgende Vertragsstaaten : BE, SE**

**1.** Phthalocyaninverbindungen der Formel

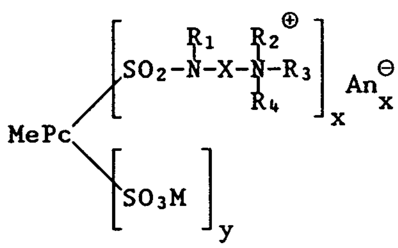

worin bedeutet:
MePc den Kupfer-, Kobalt- oder Nickelphthalocyaninrest,
$R_1$ Wasserstoff oder $C_1$-$C_4$-Alkyl,
X $C_1$-$C_8$-Alkylen,
$R_2$, $R_3$ und $R_4$ unabhängig voneinander unsubstituiertes oder durch Hydroxy, $C_1$-$C_4$-Alkoxy, Phenyl, Amino, $C_1$-$C_4$-Alkylamino oder Di-$C_1$-$C_4$-alkylamino, substituiertes $C_1$-$C_4$-Alkyl, oder
$R_1$ und $R_2$ zusammen Aethylen oder Propylen, sofern X für Methylen oder Aethylen steht, oder $R_1$ und $R_2$ zusammen Methylen, sofern X für Aethylen steht, oder 2 oder 3 der Substituenten $R_2$, $R_3$ und $R_4$ zusammen mit dem N-Atom einen 5-bis 7-gliedrigen, gegebenenfalls durch $C_1$-$C_4$-Alkyl, $C_1$-$C_4$-Hydroxyalkyl, Amino, $C_1$-$C_4$-Alkylamino oder Di-$C_1$-$C_4$-alkylamino substituierten heterocyclischen Ring, der noch ein oder zwei weitere Heteroatome aus der Gruppe O, H und S als Ringglieder enthalten kann,
$An^{\ominus}$ ein Anion, und M ein Kation, wobei x grösser als y und y grösser als 0,5 ist und die Summe von x

und y gleich oder kleiner als 4 ist.

**2.** Phthalocyaninverbindungen nach Anspruch 1, worin MePc den Kupferphthalocyaninrest bedeutet.

**3.** Phthalocyaninverbindungen nach Anspruch 1, worin X $C_2$-$C_8$-Alkylen bedeutet.

**4.** Phthalocyaninverbindungen nach einem der Ansprüche 1-3, worin bedeutet: $R_1$ Wasserstoff oder $C_1$-$C_4$-Alkyl oder zusammen mit $R_2$ Aethylen, wenn X für Aethylen steht, $R_2$, $R_3$ und $R_4$ unabhängig voneinander $C_1$-$C_4$-Alkyl, $C_1$-$C_4$-Hydroxyalkyl, oder Phenyl-$C_1$-$C_4$-alkyl, wobei vorzugsweise nur einer dieser 3 Substituenten einen substituierten Alkylrest bedeutet; oder 2 der Substituenten $R_2$, $R_3$ und $R_4$ gemeinsam mit dem N-Atom einen gesättigten 5-oder 6-gliedrigen heterocyclischen Ring, der unsubstituiert oder mit 1 oder 2 $C_1$-$C_4$-Alkyl- oder/und $C_1$-$C_4$-Hydroxyalkylgruppen substituiert ist und der noch ein weiteres O- oder N-Atom als Ringglied enthalten kann.

**5.** Phthalocyaninverbindungen nach Anspruch 4, worin $R_1$ Wasserstoff oder zusammen mit $R_2$ Aethylen, wenn X für Aethylen steht, $R_2$, $R_3$ und $R_4$ unabhängig voneinander $C_1$-$C_4$-Alkyl, $C_1$-$C_4$-Hydroxyalkyl, oder Benzyl, wobei nur einer dieser 3 Substituenten für Hydroxyalkyl oder Benzyl stehen kann; oder 2 der Substituenten $R_2$, $R_3$ und $R_4$ gemeinsam mit dem N-Atom den Pyrrolidin-, Piperidin-, Morpholin- oder unsubstituierten oder $C_1$-$C_4$-alkyl- oder $C_1$-$C_4$-hydroxyalkylsubstituierten Piperazinrest bedeuten.

**6.** Phthalocyaninverbindungen nach einem der Ansprüche 1-5, worin $R_1$ Wasserstoff bedeutet.

**7.** Phthalocyaninverbindungen nach einem der Ansprüche 1-6, worin $R_2$, $R_3$ und $R_4$ unabhängig voneinander unsubstituiertes $C_1$-$C_4$-Alkyl bedeuten.

**8.** Phthalocyaninverbindungen nach Anspruch 1, worin M Wasserstoff bedeutet.

**9.** Phthalocyaninverbindungen nach Anspruch 1, worin y gleich oder grösser als 1 ist.

**10.** Phthalocyaninverbindungen nach Anspruch 1, worin x minus y 0,1 bis 1,5 ist.

**11.** Verfahren zur Herstellung von im Anspruch 1 definierten Phthalocyaninverbindungen, dadurch gekennzeichnet, dass man
a) eine Verbindung der Formel

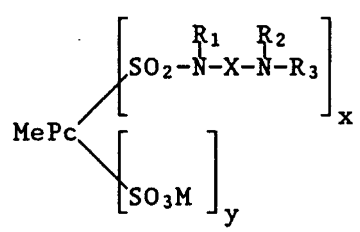

mit einer Verbindung der Formel $R_4$-An, worin die Symbole die im Anspruch 1 angegebene Bedeutung haben, quaterniert, oder
b) eine Verbindung der Formel

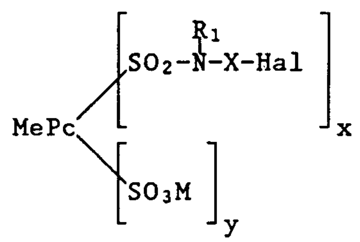

mit einer Verbindung der Formel

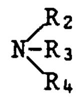

worin Hal ein Halogenatom bedeutet und die anderen Symbole die im Anspruch 1 angegebene Bedeutung haben, umsetzt.

**12.** Verwendung der im Anspruch 1 definierten Phthalocyaninverbindungen als Farbstoffe zum Färben oder Bedrucken von Substraten, welche mit kationischen Farbstoffen färbbar sind.

**13.** Verwendung nach Anspruch 12 zum Färben oder Bedrucken von Textilmaterialien.

**14.** Verwendung nach Anspruch 13 zum Färben oder Bedrucken von Cellulose- und Polyacrylnitrilmaterialien.

**15.** Verwendung nach Anspruch 12 zum Färben oder Bedrucken von Papier.

**Patentansprüche für folgenden Vertragsstaat: AT**

**1.** Verwendung von Phthalocyaninverbindungen der Formel

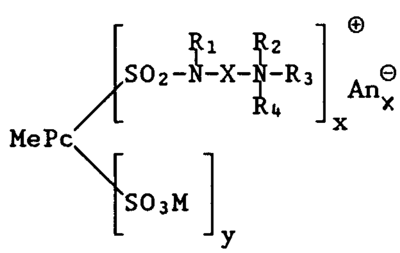

worin bedeutet:
MePc den Kupfer-, Kobalt- oder Nickelphthalocyaninrest,
$R_1$ Wasserstoff oder $C_1$-$C_4$-Alkyl,
X $C_1$-$C_8$-Alkylen,
$R_2$, $R_3$ und $R_4$ unabhängig voneinander unsubstituiertes oder durch Hydroxy, $C_1$-$C_4$-Alkoxy, Phenyl, Amino, $C_1$-$C_4$-Alkylamino oder Di-$C_1$-$C_4$-alkylamino, substituiertes $C_1$-$C_4$-Alkyl, oder
$R_1$ und $R_2$ zusammen Aethylen oder Propylen, sofern X für Methylen oder Aethylen steht, oder $R_1$ und $R_2$ zusammen Methylen, sofern X für Aethylen steht, oder 2 oder 3 der Substituenten $R_2$, $R_3$ und $R_4$ zusammen mit dem N-Atom einen 5- bis 7-gliedrigen, gegebenenfalls durch $C_1$-$C_4$-Alkyl, $C_1$-$C_4$-Hydroxyalkyl, Amino, $C_1$-$C_4$-Alkylamino oder Di-$C_1$-$C_4$-alkylamino substituierten heterocyclischen Ring, der noch ein oder zwei weitere Heteroatome aus der Gruppe O, H und S als Ringglieder enthalten kann,
$An^{\ominus}$ ein Anion, und M ein Kation, wobei x grösser als y und y grösser als 0,5 ist und die Summe von x und y gleich oder kleiner als 4 ist, als Farbstoffe zum Färben oder Bedrucken von Substraten, welche mit kationischen Farbstoffen färbbar sind.

**2.** Verwendung von Phthalocyaninverbindungen nach Anspruch 1, worin MePc den Kupferphthalocyaninrest bedeutet.

**3.** Verwendung von Phthalocyaninverbindungen nach Anspruch 1, worin X $C_2$-$C_8$-Alkylen bedeutet.

**4.** Verwendung von Phthalocyaninverbindungen nach einem der Ansprüche 1-3, worin bedeutet: $R_1$ Wasserstoff oder $C_1$-$C_4$-Alkyl oder zusammen mit $R_2$ Aethylen, wenn X für Aethylen steht, $R_2$, $R_3$ und $R_4$ unabhängig voneinander $C_1$-$C_4$-Alkyl, $C_1$-$C_4$-Hydroxyalkyl oder Phenyl-$C_1$-$C_4$-alkyl, wobei vorzugs-

weise nur einer dieser 3 Substituenten einen substituierten Alkylrest bedeutet; oder 2 der Substituenten $R_2$, $R_3$ und $R_4$ gemeinsam mit dem N-Atom einen gesättigten 5- oder 6-gliedrigen heterocyclischen Ring, der unsubstituiert oder mit 1 oder 2 $C_1$-$C_4$-Alkyl- oder/und $C_1$-$C_4$-Hydroxyalkylgruppen substituiert ist und der noch ein weiteres O- oder N-Atom als Ringglied enthalten kann.

**5.** Verwendung von Phthalocyaninverbindungen nach Anspruch 4, worin $R_1$ Wasserstoff oder zusammen mit $R_2$ Aethylen, wenn X für Aethylen steht, $R_2$, $R_3$ und $R_4$ unabhängig voneinander $C_1$-$C_4$-Alkyl, $C_1$-$C_4$-Hydroxyalkyl oder Benzyl, wobei nur einer dieser 3 Substituenten für Hydroxyalkyl oder Benzyl stehen kann; oder 2 der Substituenten $R_2$, $R_3$ und $R_4$ gemeinsam mit dem N-Atom den Pyrrolidin-, Piperidin-, Morpholin- oder unsubstituierten oder $C_1$-$C_4$-alkyl- oder $C_1$-$C_4$-hydroxyalkylsubstituierten Piperazinrest bedeuten.

**6.** Verwendung von Phthalocyaninverbindungen nach einem der Ansprüche 1-5, worin $R_1$ Wasserstoff bedeutet.

**7.** Verwendung von Phthalocyaninverbindungen nach einem der Ansprüche 1-6, worin $R_2$, $R_3$ und $R_4$ unabhängig voneinander unsubstituiertes $C_1$-$C_4$-Alkyl bedeuten.

**8.** Verwendung von Phthalocyaninverbindungen nach Anspruch 1, worin M Wasserstoff bedeutet.

**9.** Verwendung von Phthalocyaninverbindungen nach Anspruch 1, worin y gleich oder grösser als 1 ist.

**10.** Verwendung von Phthalocyaninverbindungen nach Anspruch 1, worin x minus y 0,1 bis 1,5 ist.

**11.** Verwendung nach einem der Ansprüche 1-10 zum Färben oder Bedrucken von Textilmaterialien.

**12.** Verwendung nach Anspruch 11 zum Färben oder Bedrucken von Cellulose- und Polyacrylnitrilmaterialien.

**13.** Verwendung nach einem der Ansprüche 1-10 zum Färben oder Bedrucken von Papier.

**14.** Verfahren zur Herstellung von im Anspruch 1 definierten Phthalocyaninverbindungen, dadurch gekennzeichnet, dass man

a) eine Verbindung der Formel

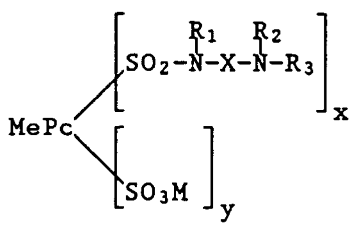

mit einer Verbindung der Formel $R_4$-An, worin die Symbole die in Anspruch 1 angegebene Bedeutung haben, quaterniert, oder

b) eine Verbindung der Formel

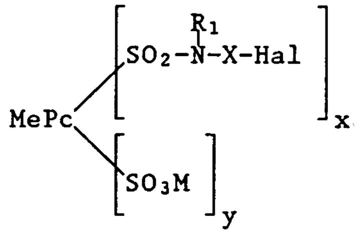

mit einer Verbindung der Formel

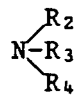

worin Hal ein Halogenatom bedeutet und die anderen Symbole die in Anspruch 1 angegebene Bedeutung haben, umsetzt.

**Claims**

**Claims for following Contracting States : CH, DE, FR, GB, IT, LI**

**1.** A phthalocyanine compound of the formula

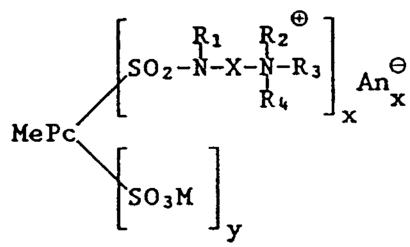

in which
MePc is the copper, cobalt or nickel phthalocyanine radical,
$R_1$ is hydrogen or $C_1$-$C_4$alkyl,
X is $C_1$-$C_8$alkylene,
$R_2$, $R_3$ and $R_4$ are each independently of one another $C_1$-$C_4$alkyl which is unsubstituted or substituted by hydroxy, $C_1$-$C_4$alkoxy, amino, $C_1C_4$alkylamino or di-$C_1$-$C_4$alkylamino or
$R_1$ and $R_2$ together are ethylene or propylene, if X is methylene or ethylene, or $R_1$ and $R_2$ together are methylene, if X is ethylene, or two or three of the substituents $R_2$, $R_3$ and $R_4$, together with the nitrogen atom, are a 5- to 7-membered heterocyclic ring which may be unsubstituted or substituted by $C_1$-$C_4$alkyl, $C_1$-$C_4$hydroxyalkyl, amino, $C_1$-$C_4$alkylamino or di-$C_1$-$C_4$alkylamino and which may additionally contain one or two further hetero atoms selected from the group consisting of O, N and S as ring members,
$An^{\ominus}$ is an anion and M is a cation, where x is greater than y and y is greater than 0.5 and the sum of x and y is 4 or less than 4, and where the sum of the carbon atoms of $R_2$, $R_3$ and $R_4$ is not greater than 7.

**2.** A phthalocyanine compound according to claim 1, in which MePc is the copper phthalocyanine radical.

**3.** A phthalocyanine compound according to claim 1, in which X is $C_2$-$C_8$alkylene.

**4.** A phthalocyanine compound according to any one of claims 1 to 3, in which $R_1$ is hydrogen or $C_1$-$C_4$alkyl or, together with $R_2$, is ethylene, if X is ethylene, $R_2$, $R_3$ and $R_4$ are each independently of one another $C_1$-$C_4$alkyl or $C_1$-$C_4$hydroxyalkyl where preferably only one of these three substituents is a substituted alkyl radical; or two of the substituents $R_2$, $R_3$ and $R_4$, together with the nitrogen atom, are a saturated 5- or 6-membered heterocyclic ring which is unsubstituted or substituted by one or two $C_1$-$C_4$alkyl and/or $C_1$-$C_4$hydroxyalkyl groups and which may additionally contain a further oxygen or nitrogen atom as ring member.

**5.** A phthalocyanine compound according to claim 4, in which $R_1$ is hydrogen or, together with $R_2$, is ethylene, if X is ethylene, $R_2$, $R_3$ and $R_4$ are each independently of one another $C_1$-$C_4$alkyl or $C_1$-$C_4$hydroxyalkyl where only one of these three substituents may be hydroxyalkyl; or two of the substituents $R_2$, $R_3$ and $R_4$, together with the nitrogen atom, are the pyrrolidine, piperidine or morpholine radical or the unsubstituted or
$C_1$-$C_4$alkyl-substituted or $C_1C_4$hydroxyalkyl-substituted piperazine radical.

**6.** A phthalocyanine compound according to any one of claims 1 to 5, in which $R_1$ is hydrogen.

**7.** A phthalocyanine compound according to any one of claims 1 to 6, in which $R_2$, $R_3$ and $R_4$ are each independently of one another unsubstituted $C_1$-$C_4$alkyl.

**8.** A phthalocyanine compound according to claim 1, in which M is hydrogen.

**9.** A phthalocyanine compound according to claim 1, in which y is 1 or greater than 1.

**10.** A phthalocyanine compound according to claim 1, in which x - y is 0.1 to 1.5.

**11.** A process for the preparation of a phthalocyanine compound as defined in claim 1, which comprises
a) quaternising a compound of the formula

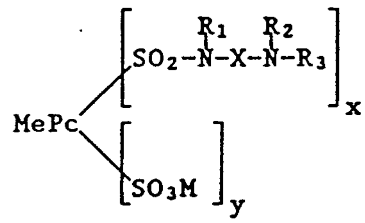

with a compound of the formula $R_4$-An, in which the symbols are as defined in claim 1, or
b) reacting a compound of the formula

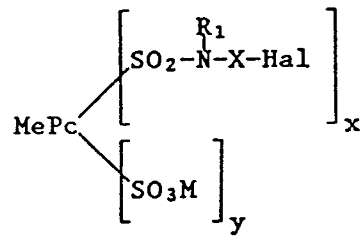

with a compound of the formula

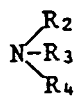

in which Hal is a halogen atom and the other symbols are as defined in claim 1.

**12.** Use of a phthalocyanine compound as defined in claim 1 as a dye for dyeing or printing substrates which are dyeable with cationic dyes.

**13.** Use according to claim 12 for dyeing or printing textile materials.

**14.** Use according to claim 13 for dyeing or printing cellulose and polyacrylonitrile materials.

**15.** Use according to claim 12 for dyeing or printing paper.

**Claims for the following Contracting States : BE, SE**

**1.** A phthalocyanine compound of the formula

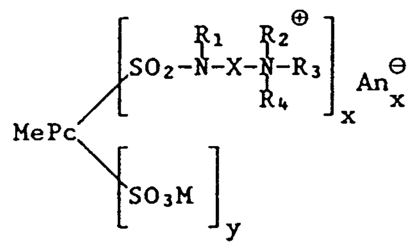

in which
MePc is the copper, cobalt or nickel phthalocyanine radical,
$R_1$ is hydrogen or $C_1$-$C_4$alkyl,
X is $C_1$-$C_8$alkylene,
$R_2$, $R_3$ and $R_4$ are each independently of one another $C_1$-$C_4$alkyl which is unsubstituted or substituted by hydroxy, $C_1$-$C_4$alkoxy, phenyl, amino, $C_1$-$C_4$alkylamino or di-$C_1$-$C_4$alkylamino or
$R_1$ and $R_2$ together are ethylene or propylene, if X is methylene or ethylene, or $R_1$ and $R_2$ together are methylene, if X is ethylene, or two or three of the substituents $R_2$, $R_3$ and $R_4$, together with the nitrogen atom, are a 5- to 7-membered heterocyclic ring which may be unsubstituted or substituted by $C_1$-$C_4$alkyl, $C_1$-$C_4$hydroxyalkyl, amino, $C_1$-$C_4$alkylamino or di-$C_1$-$C_4$alkylamino and which may additionally contain one or two further hetero atoms selected from the group consisting of O, N and S as ring members,
$An^{\ominus}$ is an anion and M is a cation, where x is greater than y and y is greater than 0.5 and the sum of x and y is 4 or less than 4.

**2.** A phthalocyanine compound according to claim 1, in which MePc is the copper phthalocyanine radical.

**3.** A phthalocyanine compound according to claim 1, in which X is $C_2$-$C_8$alkylene.

**4.** A phthalocyanine compound according to any one of claims 1 to 3, in which $R_1$ is hydrogen or $C_1$-$C_4$alkyl or, together with $R_2$, is ethylene, if X is ethylene, $R_2$, $R_3$ and $R_4$ are each independently of one another $C_1$-$C_4$alkyl, $C_1$-$C_4$hydroxyalkyl or phenyl-$C_1$-$C_4$alkyl where preferably only one of these three substituents is a substituted alkyl radical; or two of the substituents $R_2$, $R_3$ and $R_4$, together with the nitrogen atom, are a saturated 5- or 6-membered heterocyclic ring which is unsubstituted or substituted by one or two $C_1$-$C_4$alkyl and/or $C_1$-$C_4$hydroxyalkyl groups and which may additionally contain a further oxygen or nitrogen atom as ring member.

**5.** A phthalocyanine compound according to claim 4, in which $R_1$ is hydrogen or, together with $R_2$, is ethylene, if X is ethylene, $R_2$, $R_3$ and $R_4$ are each independently of one another $C_1$-$C_4$alkyl, $C_1$-$C_4$hydroxyalkyl or benzyl where only one of these three substituents may be hydroxyalkyl or benzyl; or two of the substituents $R_2$, $R_3$ and $R_4$, together with the nitrogen atom, are the pyrrolidine, piperidine or morpholine radical or the unsubstituted or $C_1$-$C_4$alkyl-substituted or $C_1$-$C_4$hydroxyalkyl-substituted piperazine radical.

**6.** A phthalocyanine compound according to any one of claims 1 to 5, in which $R_1$ is hydrogen.

**7.** A phthalocyanine compound according to any one of claims 1 to 6, in which $R_2$, $R_3$ and $R_4$ are each independently of one another unsubstituted $C_1$-$C_4$alkyl.

**8.** A phthalocyanine compound according to claim 1, in which M is hydrogen.

**9.** A phthalocyanine compound according to claim 1, in which y is 1 or greater than 1.

**10.** A phthalocyanine compound according to claim 1, in which x - y is 0.1 to 1.5.

**11.** A process for the preparation of a phthalocyanine compound as defined in claim 1, which comprises
a) quaternising a compound of the formula

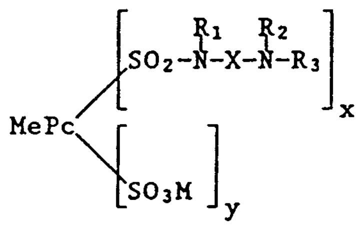

with a compound of the formula $R_4$-An, in which the symbols are as defined in claim 1, or
b) reacting a compound of the formula

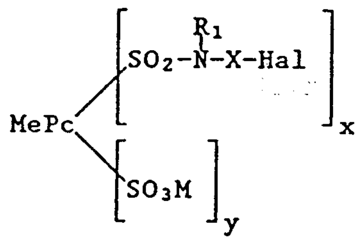

with a compound of the formula

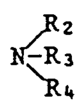

in which Hal is a halogen atom and the other symbols are as defined in claim 1.

**12.** Use of a phthalocyanine compound as defined in claim 1 as a dye for dyeing or printing substrates which are dyeable with cationic dyes.

**13.** Use according to claim 12 for dyeing or printing textile materials.

**14.** Use according to claim 13 for dyeing or printing cellulose and polyacrylonitrile materials.

**15.** Use according to claim 12 for dyeing or printing paper.

**Claims for the following Contracting State : AT**

**1.** Use of a phthalocyanine compound of the formula

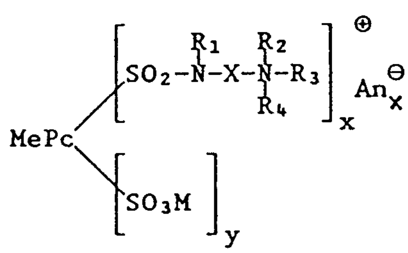

in which
MePc is the copper, cobalt or nickel phthalocyanine radical,
$R_1$ is hydrogen or $C_1$-$C_4$alkyl,
X is $C_1$-$C_8$alkylene,

$R_2$, $R_3$ and $R_4$ are each independently of one another $C_1$-$C_4$alkyl which is unsubstituted or substituted by hydroxy, $C_1$-$C_4$alkoxy, phenyl, amino, $C_1$-$C_4$alkylamino or di-$C_1$-$C_4$alkylamino or $R_1$ and $R_2$ together are ethylene or propylene, if X is methylene or ethylene, or $R_1$ and $R_2$ together are methylene, if X is ethylene, or two or three of the substituents $R_2$, $R_3$ and $R_4$, together with the nitrogen atom, are a 5- to 7-membered heterocyclic ring which may be unsubstituted or substituted by $C_1$-$C_4$alkyl, $C_1$-$C_4$hydroxyalkyl, amino, $C_1$-$C_4$alkylamino or di-$C_1$-$C_4$alkylamino and which may additionally contain one or two further hetero atoms selected from the group consisting of O, N and S as ring members,
$An^{\ominus}$ is an anion and M is a cation, where x is greater than y and y is greater than 0.5 and the sum of x and y is 4 or less than 4, as a dye for dyeing or printing substrates which are dyeable with cationic dyes.

**2.** Use of a phthalocyanine compound according to claim 1, in which MePc is the copper phthalocyanine radical.

**3.** Use of a phthalocyanine compound according to claim 1, in which X is $C_2$-$C_8$alkylene.

**4.** Use of a phthalocyanine compound according to any one of claims 1 to 3, in which $R_1$ is hydrogen or $C_1$-$C_4$alkyl or, together with $R_2$, is ethylene, if X is ethylene, $R_2$, $R_3$ and $R_4$ are each independently of one another $C_1$-$C_4$alkyl, $C_1$-$C_4$hydroxyalkyl or phenyl-$C_1$-$C_4$alkyl where preferably only one of these three substituents is a substituted alkyl radical; or two of the substituents $R_2$, $R_3$ and $R_4$, together with the nitrogen atom, are a saturated 5- or 6-membered heterocyclic ring which is unsubstituted or substituted by one or two $C_1$-$C_4$alkyl and/or $C_1$-$C_4$hydroxyalkyl groups and which may additionally contain a further oxygen or nitrogen atom as ring member.

**5.** Use of a phthalocyanine compound according to claim 4, in which $R_1$ is hydrogen or, together with $R_2$, is ethylene, if X is ethylene, $R_2$, $R_3$ and $R_4$ are each independently of one another $C_1$-$C_4$alkyl, $C_1$-$C_4$hydroxyalkyl or benzyl where only one of these three substituents may be hydroxyalkyl or benzyl; or two of the substituents $R_2$, $R_3$ and $R_4$, together with the nitrogen atom, are the pyrrolidine, piperidine or morpholine radical or the unsubstituted or $C_1$-$C_4$alkyl-substituted or $C_1$-$C_4$hydroxyalkyl-substituted piperazine radical.

**6.** Use of a phthalocyanine compound according to any one of claims 1 to 5, in which $R_1$ is hydrogen.

**7.** Use of a phthalocyanine compound according to any one of claims 1 to 6, in which $R_2$, $R_3$ and $R_4$ are each independently of one another unsubstituted $C_1$-$C_4$alkyl.

**8.** Use of a phthalocyanine compound according to claim 1, in which M is hydrogen.

**9.** Use of a phthalocyanine compound according to claim 1, in which y is 1 or greater than 1.

**10.** Use of a phthalocyanine compound according to claim 1, in which x - y is 0.1 to 1.5.

**11.** Use according to any one of claims 1 to 10 for dyeing or printing textile materials.

**12.** Use according to claim 11 for dyeing or printing cellulose and polyacrylonitrile materials.

**13.** Use according to any one of claims 1 to 10 for dyeing or printing paper.

**14.** A process for the preparation of a phthalocyanine compound as defined in claim 1, which comprises
a) quaternising a compound of the formula

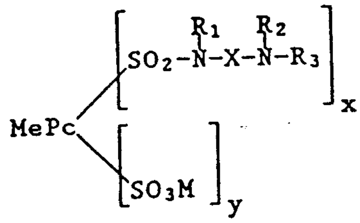

with a compound of the formula $R_4$-An, in which the symbols are as defined in claim 1, or
b) reacting a compound of the formula

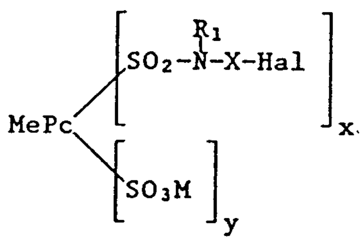

with a compound of the formula

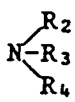

in which Hal is a halogen atom and the other symbols are as defined in claim 1.

**Revendications**
**Revendications pour les Etats contractants suivants : CH, DE, FR, GB, IT, LI**

**1.** Composés de phtalocyanines de formule

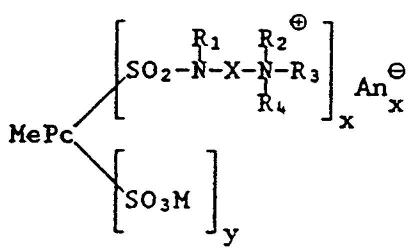

,

dans laquelle
MePc représente le reste phtalocyanine de cuivre, de cobalt ou de nickel,
$R_1$ représente un atome d'hydrogène ou un groupe alkyle en $C_{1-4}$,
X représente un groupe alkylène en $C_{1-8}$,
$R_2$, $R_3$ et $R_4$, indépendamment l'un de l'autre, représentent un groupe alkyle en $C_{1-4}$, non substitué ou substitué par hydroxyle, alcoxyle en $C_{1-4}$, amino, alkyl($C_{1-4}$)amino ou dialkyl($C_{1-4}$)amino, ou bien
$R_1$ et $R_2$ ensemble représentent le groupe éthylène ou propylène, lorsque X est méthylène ou éthylène, ou bien $R_1$ et $R_2$ ensemble représentent le groupe méthylène, lorsque X est éthylène, ou encore 2 ou 3 des substituants $R_2$, $R_3$ et $R_4$ forment avec l'atome d'azote un cycle hétérolcyclique comportant de 5 à 7 chaînons, éventuellement substitué par alkyle en $C_{1-4}$, hydroxyalkyle en $C_{1-4}$, amino,
alkyl($C_{1-4}$)amino ou dialkyl($C_{1-4}$)amino, et qui peut encore renfermer, comme chaînons du cycle, 1 ou

2 hétéroatome(s) supplémentaire(s) choisi(s) parmi O, N et S,
$An^{\ominus}$ est un anion et M est un cation,
x étant supérieur à y et y étant supérieur à 0,5, et la somme x + y étant inférieure ou égale à 4, la somme des nombres d'atomes de carbone de $R_2$, $R_3$ et $R_4$ étant au maximum égale à 7.

**2.** Composés de phtalocyanine selon la revendication 1, dans lesquels MePc représente le reste phtalocyanine de cuivre.

**3.** Composés de phtalocyanine selon la revendication 1, dans lesquels X représente alkylène en $C_{2-8}$.

**4.** Composés de phtalocyanine selon une quelconque des revendications 1 à 3, dans lesquels $R_1$ représente un atome d'hydrogène ou un groupe alkyle en $C_{1-4}$ ou, ensemble avec $R_2$, éthylène quand X est éthylène, $R_2$, $R_3$ et $R_4$, indépendamment l'un de l'autre, représentent un groupe alkyle en $C_{1-4}$ ou hydroxyalkyle en $C_{1-4}$, de préférence un seul de ces 3 substituants représentant un reste alkyle substitué, ou bien 2 des substituants $R_2$, $R_3$ et $R_4$ pouvant former ensemble avec l'atome d'azote un cycle hétérocyclique saturé à 5 ou 6 chaînons, qui est non substitué ou qui est substitué par 1 ou 2 groupe(s) alkyle en $C_{1-4}$ ou/et hydroxyalkyle en $C_{1-4}$ et qui peut encore renfermer un autre atome O ou N, comme chaînon de cycle.

**5.** Composés de phtalocyanine selon la revendication 4, dans lesquels $R_1$ représente un atome d'hydrogène ou, ensemble avec $R_2$, éthylène quand X est éthylène, $R_2$, $R_3$ et $R_4$, indépendamment l'un de l'autre, représentent un groupe alkyle en $C_{1-4}$ ou hydroxyalkyle en $C_{1-4}$, un seul de ces 3 substituants pouvant représenter un reste hydroxyalkyle, ou bien 2 des substituants $R_2$, $R_3$ et $R_4$ pouvant former ensemble avec l'atome d'azote le reste pyrrolidine, pipéridine, morpholine ou le reste pipérazine non substitué ou substitué par alkyle en $C_{1-4}$ ou hydroxyalkyle en $C_{1-4}$.

**6.** Composés de phtalocyanine selon une quelconque des revendications 1 à 5, dans lesquels $R_1$ représente un atome d'hydrogène.

**7.** Composés de phtalocyanine selon une quelconque des revendications 1 à 6, dans lesquels $R_2$, $R_3$ et $R_4$, indépendamment l'un de l'autre, représentent un groupe alkyle en $C_{1-4}$ non substitué.

**8.** Composés de phtalocyanine selon la revendication 1, dans lesquels M est un atome d'hydrogène.

**9.** Composés de phtalocyanine selon la revendication 1, dans lesquels y est égal ou supérieur à 1.

**10.** Composés de phtalocyanine selon la revendication 1, dans lesquels la différence x - y vaut de 0,1 à 1,5.

**11.** Procédé de préparation de composés de phtalocyanine définis dans la revendication 1, caractérisé en ce qu'on quaternise

a) un composé de formule

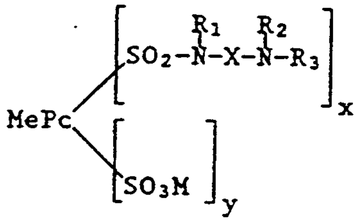

avec un composé de formule

$R_4$-An,

formules dans lesquelles les symboles ont les définitions indiquées dans la revendication 1, ou bien en ce qu'on fait réagir

b) un composé de formule

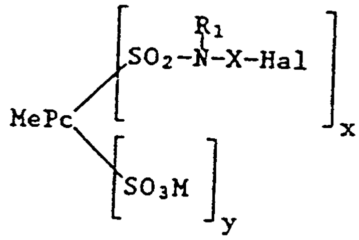

avec un composé de formule

$N(R_2R_3R_4)$,

formules dans lequelles Hal représente un atome d'halogène et les autres symboles ont les définitions indiquées dans la revendication 1.

**12.** Utilisation des composés de phtalocyanine définis dans la revendication 1, comme colorants pour la teinture ou l'impression de substrats pouvant être teints avec des colorants cationiques.

**13.** Utilisation selon la revendication 12, pour la teinture ou l'impression de matières textiles.

**14.** Utilisation selon la revendication 13, pour la teinture ou l'impression de matières à base de cellulose et de poly(acrylonitrile).

**15.** Utilisation selon la revendication 12, pour la teinture ou l'impression du papier.

**Revendications pour les Etats contractants suivants: BE, SE**

**1.** Composés de phtalocyanines de formule

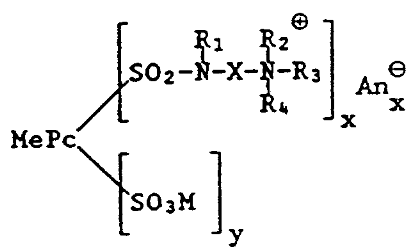

,

dans laquelle
MePc représente le reste phtalocyanine de cuivre, de cobalt ou de nickel,
$R_1$ représente un atome d'hydrogène ou un groupe alkyle en $C_{1-4}$,
X représente un groupe alkylène en $C_{1-8}$,
$R_2$, $R_3$ et $R_4$, indépendamment l'un de l'autre, représentent un groupe alkyle en $C_{1-4}$, non substitué ou substitué par hydroxyle, alcoxyle en $C_{1-4}$, phényle, amino,
alkyl($C_{1-4}$)amino ou dialkyl($C_{1-4}$)amino, ou bien $R_1$ et $R_2$ ensemble représentent le groupe éthylène ou propylène, lorsque X est méthylène ou éthylène, ou bien $R_1$ et $R_2$ ensemble représentent le groupe méthylène, lorsque X est éthylène, ou encore 2 ou 3 des substituants $R_2$, $R_3$ et $R_4$ forment avec l'atome d'azote un cycle hétérocyclique comportant de 5 à 7 chaînons, éventuellement substitué par alkyle en $C_{1-4}$, hydroxyalkyle en $C_{1-4}$, amino,
alkyl($C_{1-4}$)amino ou dialkyl($C_{1-4}$)amino, et qui peut encore renfermer, comme chaînons du cycle, 1 ou 2 hétéroatome(s) supplémentaire(s) choisi(s) parmi O, N et S,
$An^{\ominus}$ est un anion et M est un cation,
x étant supérieur à y et y étant supérieur à 0,5, et la somme x + y étant inférieure ou égale à 4.

**2.** Composés de phtalocyanine selon la revendication 1, dans lesquels MePc représente le reste phtalocyanine de cuivre.

**3.** Composés de phtalocyanine selon la revendication 1, dans lesquels X représente alkylène en $C_{2-8}$.

**4.** Composés de phtalocyanine selon une quelconque des revendications 1 à 3, dans lesquels $R_1$ représente un atome d'hydrogène ou un groupe alkyle en $C_{1-4}$ ou, ensemble avec $R_2$, éthylène quand X est éthylène, $R_2$, $R_3$ et $R_4$, indépendamment l'un de l'autre, représentent un groupe alkyle en $C_{1-4}$, hydroxyalkyle en $C_{1-4}$ ou phénylalkyle($C_{1-4}$), de préférence un seul de ces 3 substituants représentant un reste alkyle substitué, ou bien 2 des substituants $R_2$, $R_3$ et $R_4$ pouvant former ensemble avec l'atome d'azote un cycle hétérocyclique saturé à 5 ou 6 chaînons, qui est non substitué ou qui est substitué par 1 ou 2 groupe(s) alkyle en $C_{1-4}$ ou/et hydroxyalkyle en $C_{1-4}$ et qui peut encore renfermer un autre atome O ou N, comme chaînon du cycle.

**5.** Composés de phtalocyanine selon la revendication 4, dans lesquels $R_1$ représente un atome d'hydrogène ou, ensemble avec $R_2$, éthylène quand X est éthylène, $R_2$, $R_3$ et $R_4$, indépendamment l'un de l'autre, représentent un groupe alkyle en $C_{1-4}$, hydroxyalkyle en $C_{1-4}$ ou benzyle, un seul de ces 3 substituants pouvant représenter un reste hydroxyalkyle ou benzyle, ou bien 2 des substituants $R_2$, $R_3$ et $R_4$ pouvant former ensemble avec l'atome d'azote le reste pyrrolidine, pipéridine, morpholine ou le reste pipérazine non substitué ou substitué par alkyle en $C_{1-4}$ ou hydroxyalkyle en $C_{1-4}$.

**6.** Composés de phtalocyanine selon une quelconque des revendications 1 à 5, dans lesquels $R_1$ représente un atome d'hydrogène.

**7.** Composés de phtalocyanine selon une quelconque des revendications 1 à 6, dans lesquels $R_2$, $R_3$ et $R_4$, indépendamment l'un de l'autre, représentent un groupe alkyle en $C_{1-4}$ non substitué.

**8.** Composés de phtalocyanine selon la revendication 1, dans lesquels M est un atome d'hydrogène.

**9.** Composés de phtalocyanine selon la revendication 1, dans lesquels y est égal ou supérieur à 1.

**10.** Composés de phtalocyanine selon la revendication 1, dans lesquels la différence x - y vaut de 0,1 à 1,5.

**11.** Procédé de préparation de composés de phtalocyanine définis dans la revendication 1, caractérisé en ce qu'on quaternise

a) un composé de formule

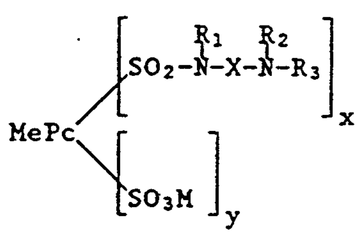

avec un composé de formule

$R_4$-An,

formules dans lesquelles les symboles ont les définitions indiquées dans la revendication 1, ou bien en ce qu'on fait réagir

b) un composé de formule

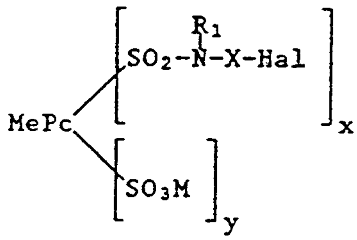

avec un composé de formule

$N(R_2R_3R_4)$,

formules dans lesquelles Hal représente un atome d'halogène et les autres symboles ont les définitions indiquées dans la revendication 1.

**12.** Utilisation des composés de phtalocyanine définis dans la revendication 1, comme colorants pour la teinture ou l'impression de substrats pouvant être teints avec des colorants cationiques.

**13.** Utilisation selon la revendication 12, pour la teinture ou l'impression de matières textiles.

**14.** Utilisation selon la revendication 13, pour la teinture ou l'impression de matières à base de cellulose et de poly(acrylonitrile).

**15.** Utilisation selon la revendication 12, pour la teinture ou l'impression du papier.

**Revendications pour l'Etat contractant suivant : AT**

**1.** Utilisation des composés de phtalocyanines de formule

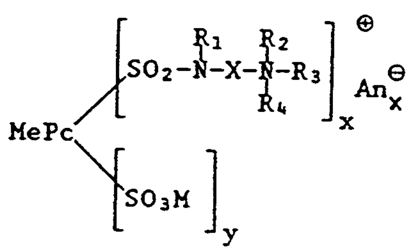

,

dans laquelle
MePc représente le reste phtalocyanine de cuivre, de cobalt ou de nickel,
$R_1$ représente un atome d'hydrogène ou un groupe alkyle en $C_{1-4}$,
X représente un groupe alkylène en $C_{1-8}$,
$R_2$, $R_3$ et $R_4$, indépendamment l'un de l'autre, représentent un groupe alkyle en $C_{1-4}$, non substitué ou substitué par hydroxyle, alcoxyle en $C_{1-4}$, phényle, amino, alkyl($C_{1-4}$)amino ou dialkyl($C_{1-4}$)amino, ou bien
$R_1$ et $R_2$ ensemble représentent le groupe éthylène ou propylène, lorsque X est méthylène ou éthylène, ou bien $R_1$ et $R_2$ ensemble représentent le groupe méthylène, lorsque X est éthylène, ou encore 2 ou 3 des substituants $R_2$, $R_3$ et $R_4$ forment avec l'atome d'azote un cycle hétérocyclique comportant de 5 à 7 chaînons, éventuellement substitué par alkyle en $C_{1-4}$, hydroxyalkyle en $C_{1-4}$, amino,
alkyl($C_{1-4}$)amino ou dialkyl($C_{1-4}$)amino, et qui peut encore renfermer, comme chaînons du cycle, 1 ou 2 hétéroatome(s) supplémentaire(s) choisi(s) parmi O, N et S,
$An^{\ominus}$ est un anion et M est un cation,
x étant supérieur à y et y étant supérieur à 0,5, et la somme x + y étant inférieure ou égale à 4, comme colorants pour teindre ou imprimer des substrats pouvant être teints avec des colorants

cationiques.

2. Utilisation de composés de phtalocyanine selon la revendication 1, dans lesquels MePc représente le reste phtalocyanine de cuivre.

3. Utilisation de composés de phtalocyanine selon la revendication 1, dans lesquels X représente alkylène en $C_{2-8}$.

4. Utilisation de composés de phtalocyanine selon une quelconque des revendications 1 à 3, dans lesquels $R_1$ représente un atome d'hydrogène ou un groupe alkyle en $C_{1-4}$ ou, ensemble avec $R_2$, éthylène quand X est éthylène, $R_2$, $R_3$ et $R_4$, indépendamment l'un de l'autre, représentent un groupe alkyle en $C_{1-4}$, hydroxyalkyle en $C_{1-4}$ ou phénylalkyle($C_{1-4}$), de préférence un seul de ces 3 substituants représentant un reste alkyle substitué, ou bien 2 des substituants $R_2$, $R_3$ et $R_4$ pouvant former ensemble avec l'atome d'azote un cycle hétérocyclique saturé à 5 ou 6 chaînons, qui est non substitué ou qui est substitué par 1 ou 2 groupe(s) alkyle en $C_{1-4}$ ou/et hydroxyalkyle en $C_{1-4}$ et qui peut encore renfermer un autre atome O ou N, comme chaînon du cycle.

5. Utilisation de composés de phtalocyanine selon la revendication 4, dans lesquels $R_1$ représente un atome d'hydrogène ou, ensemble avec $R_2$, éthylène quand X est éthylène, $R_2$, $R_3$ et $R_4$, indépendamment l'un de l'autre, représentent un groupe alkyle en $C_{1-4}$, hydroxyalkyle en $C_{1-4}$ ou benzyle, un seul de ces 3 substituants représentant un reste hydroxyalkyle ou benzyle, ou bien 2 des substituants $R_2$, $R_3$ et $R_4$ pouvant former ensemble avec l'atome d'azote le reste pyrrolidine, pipéridine, morpholine ou le reste pipérazine non substitué ou substitué par alkyle en $C_{1-4}$ ou hydroxyalkyle en $C_{1-4}$.

6. Utilisation de composés de phtalocyanine selon une quelconque des revendications 1 à 5, dans lesquels $R_1$ représente un atome d'hydrogène.

7. Utilisation de composés de phtalocyanine selon une quelconque des revendications 1 à 6, dans lesquels $R_2$, $R_3$ et $R_4$, indépendamment l'un de l'autre, représentent un groupe alkyle en $C_{1-4}$ non substitué.

8. Utilisation de composés de phtalocyanine selon la revendication 1, dans lesquels M est un atome d'hydrogène.

9. Utilisation de composés de phtalocyanine selon la revendication 1, dans lesquels y est égal ou supérieur à 1.

10. Utilisation de composés de phtalocyanine selon la revendication 1, dans lesquels la différence x - y vaut de 0,1 à 1,5.

11. Utilisation selon l'une quelconque des revendications 1 à 10, pour la teinture ou l'impression de matières textiles.

12. Utilisation selon la revendication 11, pour la teinture ou l'impression de matières à base de cellulose et de poly(acrylonitrile).

13. Utilisation selon l'une quelconque des revendications 1 à 10, pour la teinture ou l'impression du papier.

14. Procédé de préparation des composés de phtalocyanine définis dans la revendication 1, caractérisé en ce qu'on quaternise
a) un composé de formule

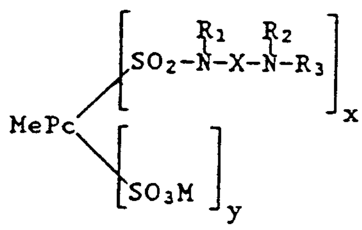

avec un composé de formule

$R_4$-An,

formules dans lesquelles les symboles ont les définitions indiquées dans la revendication 1, ou bien en ce qu'on fait réagir

b) un composé de formule

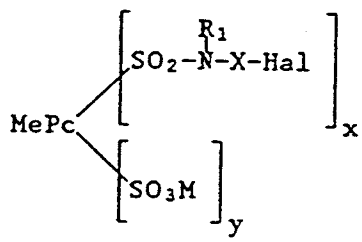

avec un composé de formule

$N(R_2R_3R_4)$,

formules dans lesquelles Hal représente un atome d'halogène et les autres symboles ont les définitions indiquées dans la revendication 1.